# EUROPEAN PATENT SPECIFICATION

(11) **EP 0 750 096 B1**
(45) Date of publication and mention of the grant of the patent: **26.04.2000**
(21) Application number: 96113215.6
(22) Date of filing: 22.02.1994
(51) Int. Cl.: E21D 11/10, E21B 33/14

(54) **A method for injecting back-filling material into a space between the outside of double-wall pipes and the ground in the pipe-jacking method**
Verfahren zum Einspritzen von Zurückfüllungsmaterial in einen Raum zwischen der Aussenseite von doppelwandigen Rohren und dem Boden für die Rohrvorpressmethode
Procédé d'injection de materiel de remplissage dans un espace entre les tubes à double paroi et le sol, dans le procédé de poussage des tubes

(30) Priority: 03.03.1993 JP 6594393; 03.03.1993 JP 6594893; 22.03.1993 JP 8511293; 22.03.1993 JP 8511393; 30.03.1993 JP 9386693
(43) Date of publication of application: 27.12.1996
(62) Divisional of application: 94301236.9
(73) Proprietor: TOKYO GAS CO., LTD., Minato-ku, Tokyo 105-0022 (JP); Kabushiki Kaisha Isekikaihatsukohki, Shibuya-Ku Tokyo (JP)
(72) Inventor: Hayashi, Mitsutoshi, Ohmiya, Saitama (JP); Fujita, Akitaka, Meguro-ku, Tokyo (JP); Nagashima, Shingo, Tokyo (JP); Kurashina, Minoru, Tokyo (JP); Kajiyama, Makoto, Zama, Kanagawa (JP); Uno, Hideki, Tokorozawa, Saitama (JP)
(74) Representative: Pacitti, Pierpaolo A.M.E.

(56) References cited:
- DE-A- 3 015 210
- FR-A- 2 380 413
- US-A- 3 589 135
- US-A- 4 176 985
- US-A- 4 728 223
- US-A- 4 956 032
- US-A- 5 221 160
- PATENT ABSTRACTS OF JAPAN vol. 018, no. 027 (M-1543), 17 January 1994 & JP-A-05 263586 (TOKYO GAS CO LTD;OTHERS: 01), 12 October 1993,
- PATENT ABSTRACTS OF JAPAN vol. 018, no. 027 (M-1543), 17 January 1994 & JP-A-05 263587 (TOKYO GAS CO LTD;OTHERS: 01), 12 October 1993,
- PATENT ABSTRACTS OF JAPAN vol. 014, no. 013 (M-918), 11 January 1990 & JP-A-01 260197 (OHBAYASHI CORP), 17 October 1989,

## Description

### BACKGROUND TO THE INVENTION

### Field of the Invention

The present invention relates to a method of injecting back-filling material into a space between the outside of double-wall pipes and the ground in laying a conduit comprised of double-wall pipes each of which comprises an inner pipe and an outer pipe, by laying a conduit comprised of double-wall pipes, and thereafter supplying back-filling material to each check valve mounted in an outer pipe of each double-wall pipe through a back-filling material supply pipe introduced through sheath pipes each of which is provided between the inner pipe and the outer pipe of each double-wall pipe, and injecting back-filling material through each check valve into a space between the outside of each double-wall pipe and the ground.

### Description of the Prior Art

Laying sewer conduit or service water conduit in the ground is carried out by tunnelling through the ground by a tunnelling machine, while the tunnelling machine followed by pipes such as Hume pipes and steel pipes is propelled by a pipe-jacking machine, wherein it is carried out to inject lubricant into a space between the outside of the tunnelling machine and the ground and between the outside of pipes and the ground. Further, in the abovementioned pipe-jacking method, it is also carried out to inject back-filling material into a space between the outside of pipes forming a conduit and the ground, after having laid the conduit.

Each of pipes with diameter over 800mm used in the abovementioned pipe-jacking method is formed with a hole at a given position. The hole is connected through a hose with a lubricant or back-filling material feeder, which is provided on the ground. While propelling pipes, lubricant is injected into a space between the outside of pipes and the ground, by supplying lubricant through the hose to the hole and injecting lubricant to the space through the hole so that frictional force can be decreased, or after having laid a desired conduit in the ground, back-filling material is injected in to a space between the outside of pipes and the ground is filled with back-filling material.

On the other hand, there is a case where a conduit for supplying gas such as coal gas or fuel gas and natural gas and others is laid in the ground. Since a gas pipe requires the higher gastightness, gas pipes are connected with each other by mutually welding the edges of pipes, wherein the weld is inspected by non-destructive inspection to determine whether a conduit for supplying gas is formed without welding defect.

Since in such a way, a gas pipe requires the higher gastightness, it is thought that a gas pipe cannot be provided with a hole for injecting lubricant or back-filling material to a space between the outside of pipes and the ground. Further, it is thought that the edge of a gas pipe cannot be brought into immediate contact with a push ring of a pipe-jacking machine so that gas pipes cannot be propelled by a pipe-jacking machine, because there is the possibility that the edge of the gas pipe will be damaged by the push ring.

Since there is the abovementioned problem, when laying a conduit for gas, in general, a conduit comprised of Hume pipes with the diameter sufficiently larger than the outside of gas pipe is first laid by the pipe-jacking method, and a space between the outside of the conduit comprised of Hume pipes and the ground is filled with back-filling material, then a conduit for gas supply comprised of gas pipes is formed within the conduit comprised of Hume pipes.

Recently, it has been developed that double-wall pipes each of which is composed of an outer pipe and an inner pipe inserted into the outer pipes are prefabricated (see for example US-A-5 063 967 and US-A-5 241 933), and thrust is applied to the outer pipes from a pipe-jacking machine so that the inner pipes and the outer pipes can be simultaneously propelled. In this pipe-jacking method, every time an individual double-wall pipe is propelled into the ground, the edge of an inner pipe of the individual double-wall pipe which has been propelled into the ground is welded with the edge of new individual double-wall pipe which is disposed in a start vertical shaft so that a conduit comprised of inner pipes with the higher gastightness can be laid by one pipe-jacking process.

Each of the abovementioned double-wall pipes is preliminarily provided with a sheath pipe into which a lubricant or back-filling material supply pipe is inserted, between the inner pipe and the outer pipe of each double-wall pipe and with a check valve for injecting lubricant or back-filling material into a space between the outside of double-wall pipes and the ground, in the outer pipe, wherein the check valve is connected with the sheath pipe. While propelling double-wall pipes in the ground, lubricant is injected into a space between the outside of double-wall pipes and the ground, or after having laid a conduit comprised of double-wall pipes, back-filling material is injected into a space between the outside of double-wall pipes and the ground, by inserting a back-filling material supply pipe into sheath pipes each of which is provided between the inner pipe and the outer pipe of each double-wall pipe, supplying back-filling material to each check valve, and injecting back-filling material through each check valve into a space between the outside of double-wall pipes and the ground.

However, the abovementioned operation in which lubricant or back-filling material is injected into a space between the outside of double-wall pipes and the ground is done by hand. In particular, the work done by hand is to move the head of a lubricant or back-filling material supply pipe to the position at which the head of the supply pipe is opposed to the desired check valve, through sheath pipes, and this work takes a long time and much labour.

### BRIEF SUMMARY OF THE INVENTION

It is an object of the present invention to provide a method of injecting back-filling material in a space between the outside of double-wall pipes and the ground, after having laid a conduit comprised of double-wall pipes in the ground.

To achieve the object of the present invention, the invention is characterised in that a back-filling material supply pipe provided with an injecting member at the forward end thereof is inserted into sheath pipes each of which is provided between an inner pipe and an outer pipe of each double-wall pipe, which double-wall pipes form a conduit which has been laid between a first start vertical shaft and a second arrival vertical shaft and are provided with check valves in outer pipes thereof respectively, from a side of one vertical shaft, until an outlet of the injecting pipe reaches a position where the outlet is opposed to a check valve which is situated at about a centre of the conduit, at which back-filling material is injected into a space between the outside of double-wall pipes and the ground through the outlet of the injecting pipe and the check valve which is situated at about a centre of the conduit, and then the back-filling material supply pipe is drawn back toward the side of the first vertical shaft, while back-filling material is injected into a space between the outside of double-wall pipes and the ground through the outlet of injecting pipe and a check valve which is opposed to the outlet of injecting pipe, by which the space between the outside of double-wall pipes corresponding to half of the length of the conduit and the ground is filled with back-filling material, and thereafter the back-filling material supply pipe is inserted into the sheath pipe from the side of the second vertical shaft until the outlet of the injecting pipe reaches a position where the outlet is opposed to a check valve which is situated at the inmost portion of the conduit from the side of the second vertical shaft, at which back-filling material is injected into a space between the outside of double-wall pipes and the ground, and then the back-filling material supply pipe is drawn back toward the side of the second vertical shaft, while back-filling material is injected into a space between the outside of double-wall pipes and the ground through the outlet of injecting pipe and a check valve which is opposed to the outlet of injecting pipe, by which the space between the outside of double-wall pipes corresponding to the full length of the conduit and the ground is filled with back-filling material.

According to the present invention, since operations for injecting back-filling material into a space between the outside of the conduit which has been laid and the ground may be conducted both by inserting a back-filling material supply pipe into sheath pipes of double-wall pipes from a side of one vertical shaft and by inserting the back-filling material supply pipe into sheath pipes of double-wall pipes from a side of the other side, the back-filling material pipe may have a length nearly half that of the conduit. Therefore, the length of the back-filling material supply pipe can be shortened as compared with a case where back-filling material is injected into a space between the outside of the conduit and the ground over the full length of the conduit from a side of one vertical shaft to a side of the other vertical shaft so that the frictional force between the back-filling material supply pipe and the sheath pipe can be reduced and the diameter of the back-filling material supply pipe can be made small.

Accordingly, a back-filling material feeder, for example the pressure pump's ability, can be increased and a winder for the back-filling material supply pipe can be small-sized. Further, an outer pipe of double-wall pipe can be made thin while the size of an inner pipe thereof can be maintained.

### BRIEF DESCRIPTION OF THE DRAWINGS

In the drawings:

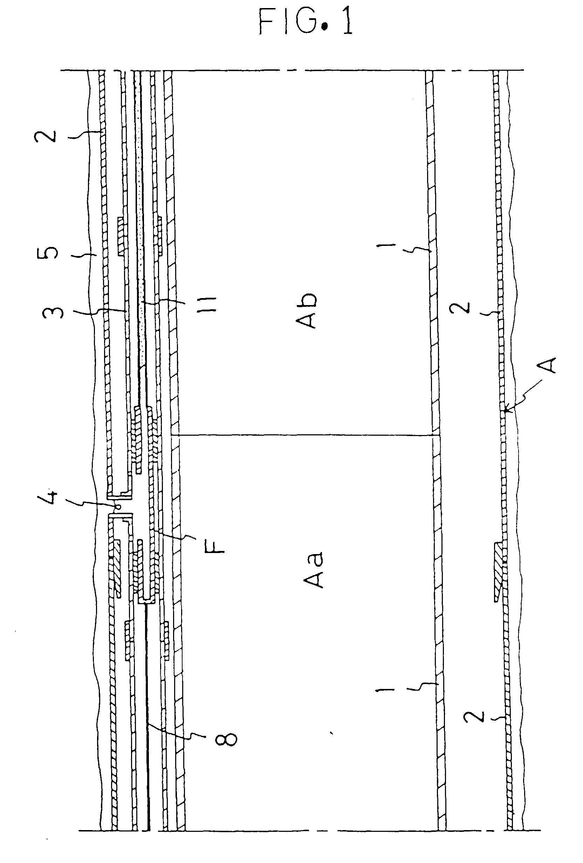

Fig 1 is a view for illustrating the structure of double-wall pipes and a state where lubricant or back-filling material is injected into a space between double-wall pipes and the ground;

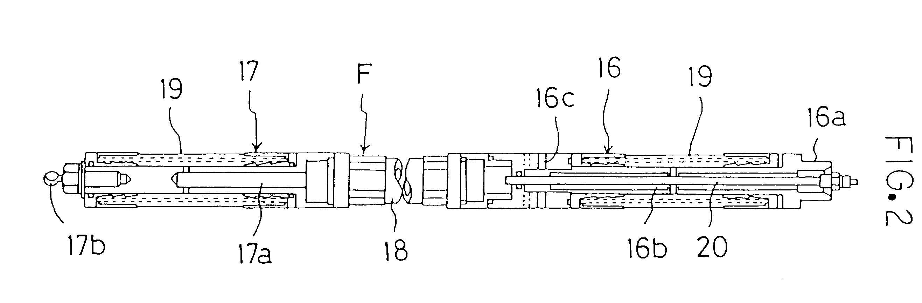

Fig 2 is a view for illustrating the structure of an injecting material;

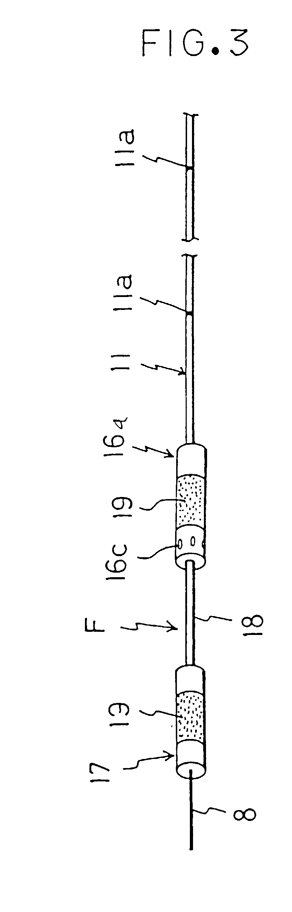

Fig 3 is a view for illustrating a lubricant supply pipe or a back-filling material supply pipe which is marked with degrees;

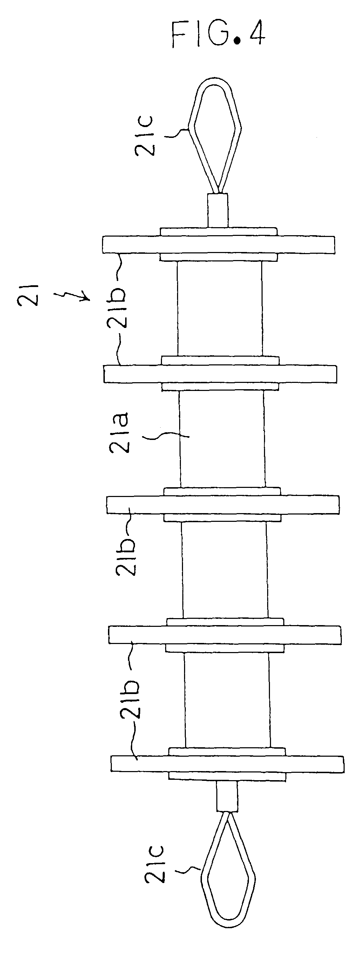

Fig 4 is a view for illustrating the structure of a cleaning member;
Fig 5 is a view for illustrating the steps of injecting back-filling material into a space between the conduit which has been laid and the ground, wherein an initial preparatory step is shown;
Fig 6 is a view for illustrating a state where injection of back-filling material into a space between the conduit and the ground is started;
Fig 7 is a view for illustrating a state where back-filling material is injected into a space between the conduit and the ground while a back-filling material supply pipe is drawn back;
Fig 8 is a view for illustrating a preparatory operation for injecting back-filling material into a space between the conduit and the ground by inserting a back-filling material supply pipe into a sheath pipe from a side of the other vertical shaft after injecting back-filling material into a space between the conduit and the ground by inserting the back-filling material supply pipe into the sheath pipe from a side of one vertical shaft;
Fig 9 is a view for illustrating a state where injection of back-filling material into a space between the conduit and the ground by inserting a back-filling material supply pipe into a sheath pipe is started; and
Fig 10 is a view for illustrating a state where a space between the full conduit and the ground has been filled with back-filling material.

### DETAILED DESCRIPTION OF THE PREFERRED EMBODIMENT

First, the structure of double-wall pipe A is explained. Double-wall pipe A comprises inner pipe 1 and outer pipe 2. Inner pipe 1 is held by means of brackets (not shown) provided between inner pipe 1 and outer pipe 2 both in the longitudinal direction and in the circumferential direction. Inner pipe 1 and outer pipe 2 are made of steel pipe with the preset diameter and length respectively.

In the embodiment of the invention, double-wall pipe A is provided with a view to supplying combustible gas wherein inner pipe 1 requires the higher airtightness. Therefore, when new double-wall pipe Ab is connected to double-wall pipe Aa which has been propelled, inner pipe 1 of new double-wall pipe Ab and double-wall pipe Aa which has been propelled are welded to each other along all the circumference.

One or plural sheath pipes 3 are provided in the longitudinal direction of double-wall pipe A between inner pipes 1 and outer pipes 2. Outer pipe 2 is provided with check valve 4 at the given position, which is connected with sheath pipe 3 and opened outward of outer pipe 2. Check valve 4 is used for injecting lubricant or back-filling material into space 5 formed between outer pipes 2 and the ground and prevents subterranean water from penetrating into the inside of double-wall pipes A.

Supply pipe 11 for lubricant is made of flexible material. Supply pipe 11 is wound on drum 13 which is driven by drive 12. An end of supply pipe 11 is connected with pump 14 for forcing lubricant. Pump 14 is connected with a tank (not shown) containing lubricant. Numeral 15 designates a control panel for controlling driver 12, drum 13 and pump 14. Lubricant feeder E comprises driver 12, drum 13, pump 14, a tank and others.

Injecting member F is connected with the other end of supply pipe 11. Injecting member F has two packing means 16, 17 disposed at a given interval, which are connected with hose 18. The interval between packing means 16, 17 is preferably sufficiently larger than the size of the space where check valve 4 is disposed.

Packing means 16, 17 have rubber tubes 19, respectively. Filling member F connected with the other end of supply pipe 11 is moved into sheath pipe 3 so that injecting members F are positioned at a distance from each other and at the desired relative positions to sheath pipe 3, thereafter compressed gas is supplied into rubber tube 19 to inflate rubber tube 19 so that rubber tube 19 is brought closely into contact with the inside of sheath pipe 3 by which injecting member is fixed to sheath pipe 3 and an airtight space between packing means 16, 17 is formed.

Packing means 16 is provided with nipple 16a one end of which is connected with supply pipe 11. A gas pipe 20 through which compressed gas as compressed air or nitrogen gas is passed is provided in packing means 16, and a path 16b for flowing lubricant is formed between the inside of packing means 16 and gas pipe 20. Packing means 16 is formed at the other end thereof with outlet 16c through which lubricant is injected into sheath pipe 3. The other end of gas pipe 20 opens within hose 18 so that compressed gas passed through pipe 20 is supplied through to packing means 17.

Packing means 17 has therein path 17a into which compressed gas is passed so that rubber tube 18 is inflated by compressed gas. Packing means 17 is provided at the forward end thereof with hook 17b to which wire 8 would on winch 23 or hereinafter mentioned cleaning member 21 may be connected.

Supply pipe 11 has marks 11a at regular intervals, for example at intervals corresponding to unit length of a double-wall pipe A or the length of plurality of double-wall pipes A. Therefore, when injecting member F and supply pipe 11 are moved in sheath pipe 3, a relative position of injecting member F to sheath pipe 3 can be determined by checking marks 11a.

Cleaning member 21 is provided at the forward end of injecting member F to clean the inside of sheath pipe 3. Cleaning member 21 facilitates the travel of injecting member F and supply pipe 11 by removing foreign material such as lubricant or other material which remains in sheath pipe 3.

Cleaning member 21 comprises shaft 21a and a plurality of cleaning plates 21b arranged on shaft 21a at given intervals. Each cleaning plate 21b has a shape which is nearly equal to that of the interior cross section of sheath pipe 3. Particularly when cleaning plate 21b is made of a rubber plate having the suitable flexibility and rigidity, the outside of cleaning plate 21b is brought into contact with the inside of sheath pipe 3 so that the inside of sheath pipe 3 can be surely cleaned. Further, cleaning member 21 is provided at both sides thereof with connecting portion 21c for connecting cleaning member 21 with injecting member F and wire 8, respectively.

Injection of back-filling material can be carried out by carrying out the same operation as the injection of lubricant described in EP-A-0 613 991: pump 14 connected with a tank in which back-filling material is put is connected with supply pipe 11 provided with injecting member F. At this time, a pump and a supply pipe for exclusive use for back-filling material may be used as pump 14 and supply pipe 11. However, they have the same structure as that of a pump and a supply pipe for lubricant. Further, a cleaning member is not necessary.

Injecting member F and supply pipe 11 are moved through sheath pipe 3 provided in double-wall pipes A forming conduit B which has been laid, to the double-wall pipe A which is in the forefront, and thereafter pump 14 is driven by which back-filling material is injected through check valve 4 into the space 5 between the outside of the double-wall pipe A which is in the forefront and the ground. Further, while supply pipe 11 is pulled back toward start vertical shaft C, back-filling material is injected into space 5 between the outside of double-wall pipe A and the ground, at positions where the supply pipe 11 is opposed to each check valve 4 in order. When the injection of back-filling material into space 5 formed between double-wall pipe A near to start vertical shaft A and the ground through check valve 4 provided in the double-wall pipe A near to start vertical shaft A is finished, the filling of space 5 formed between conduit B and the ground with back-filling material is finished.

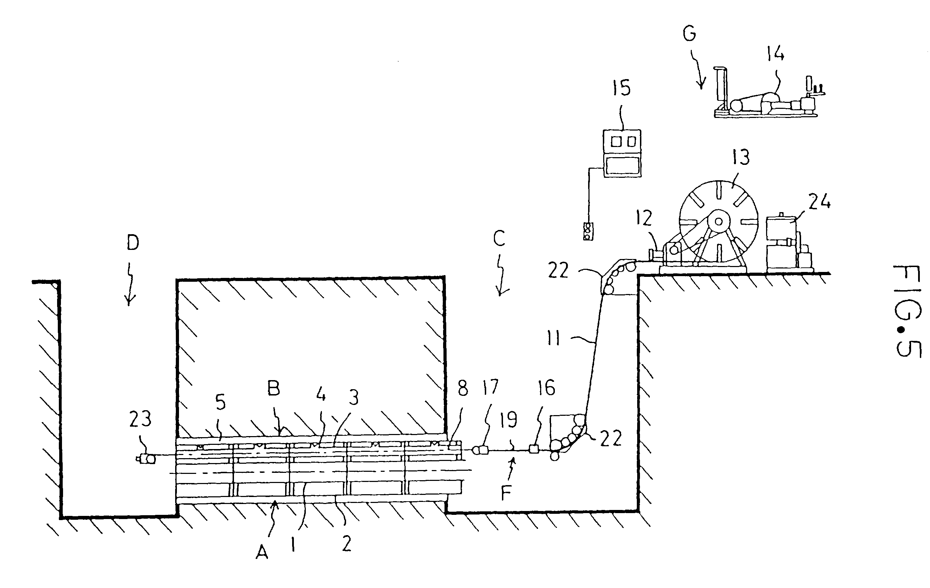

A method of injecting back-filling material into space 5 formed between conduit B laid between start vertical shaft C and arrival vertical shaft D and the ground is explained referring to Figs 5 to 10, wherein like reference characters designate like or corresponding parts throughout, about which explanation is omitted.

After conduit B has been laid between start vertical shaft C and arrival vertical shaft D, tunnelling machine 6 is separated from the double-wall pipe A which is in the forefront and taken out of arrival vertical shaft D.

As shown in Fig 5, winch 23 on which wire 8 inserted into sheath pipes 3 provided in double-wall pipes A is wound is mounted in arrival vertical shaft D, and back-filling material feeder G is mounted. Back-filling material feeder G comprises mixer 24 and pump 14. Back-filling material is mixed in mixer 24 and forced by pump 14 to be sent through supply pipe 11 into a space formed between conduit B and the ground.

Wire 8 unwound from winch 23 is sent through the inside of sheath pipes 3 toward start vertical shaft C, and connected with injecting member F provided in supply pipe 11.

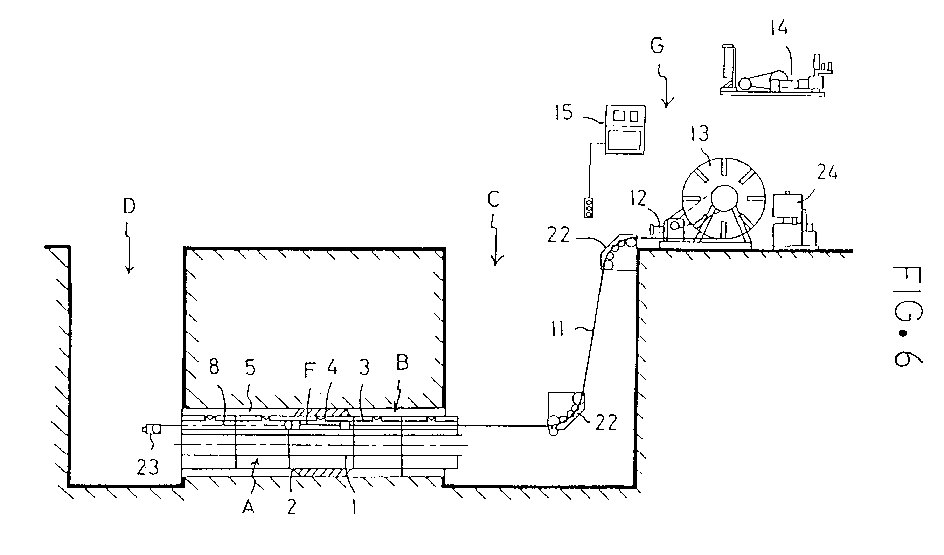

Then, as shown in Fig 6, wire 8 is would on winch 23 by driving winch 23 so that injecting member F and supply pipe 11 are moved into sheath pipe 3 to such a position that injecting member F is opposed to a check valve 4 positioned nearly in the centre of conduit B. When injecting member F is moved to such a position that injecting member F is opposed to the given check valve 4, packing means 16, 17 are inflated so that the inside of sheath pipe 3 between packing means 16, 17 is sealed, and thereafter back-filling material is supplied through supply pipe 11 into the inside of sheath pipe 3 from injecting member F, and injected through check valve 4 into space 5 formed between outer pipe 2 of double-wall pipe A and the ground. When the injected amount of back-filling material reaches the given amount, pump 14 is stopped.

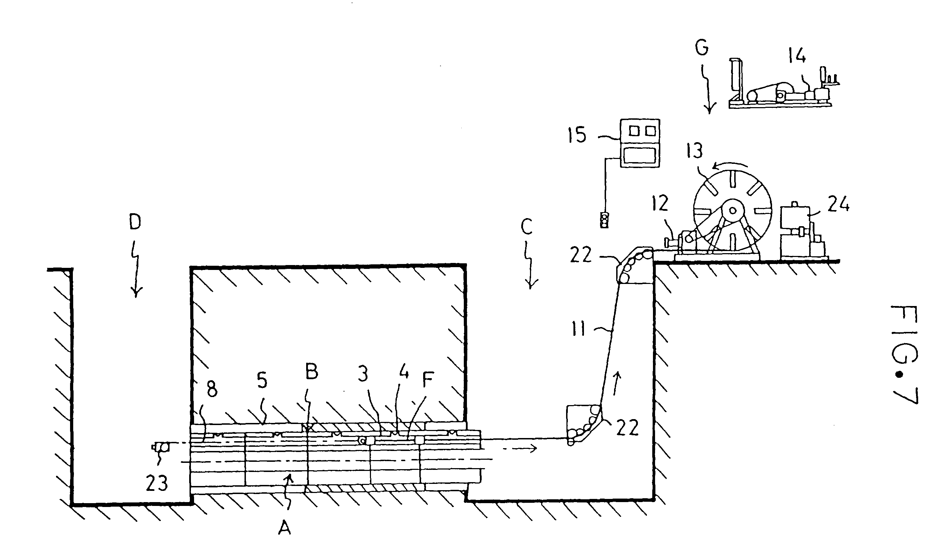

Then, as shown in Fig 7, injecting member F is moved back toward start vertical shaft C by winding supply pipe 11 on drum 13 by driving drum 13 by which injecting member F is opposed to check valve 4 provided in a double-wall pipe A near to start vertical shaft C side of double-wall pipe A wherein a space between the outside of the double-wall pipe A and the ground has been filled with back-filling material, and back-filling material is injected into space 5 between conduit B and the ground by carrying out the same operation as the abovementioned operation.

Then, in the same manner, back-filling material is injected into space 5 between the outer pipes 2 of double-wall pipes A arranged on start vertical shaft C side and the ground. Thereby back-filling material can be injected into the space 5 between a portion of conduit B having approximately half the length of the full length of conduit and the ground.

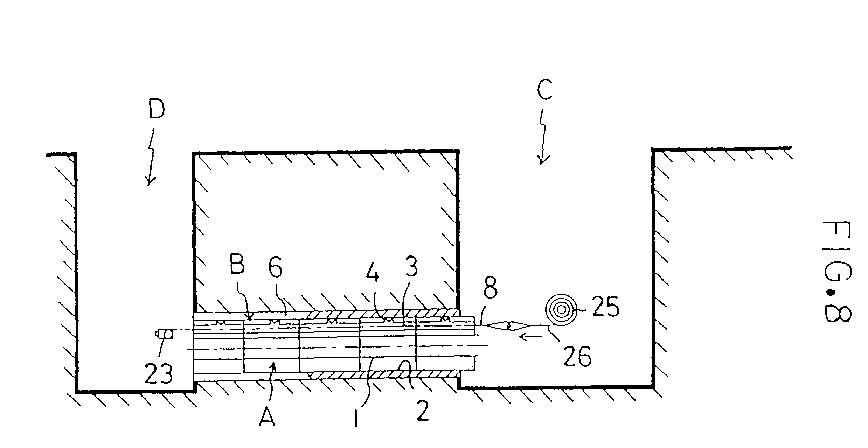

As above-mentioned, the space 5 around a half portion of conduit B extending from approximately the centre of conduit B toward the start vertical shaft C and the ground can be filled with back-filling material, and thereafter, as shown in Fig 8, wire reel 25 is equipped in start vertical shaft C, and auxiliary wire 26 wound on wire reel 25 is connected with wire 8. Auxiliary wire 26 is unwound by driving winch 23 equipped in arrival vertical shaft D so that the forward end of auxiliary wire 26 comes to arrival vertical shaft D.

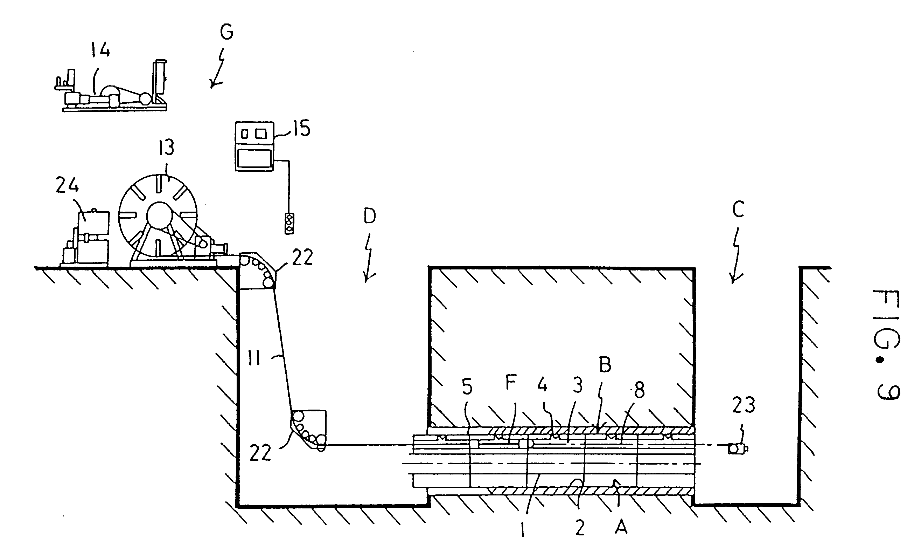

Then, as shown in Fig 9, winch 23 is equipped in starting vertical shaft C, while back-filling material feeder G is installed in vertical shaft D. After injecting member F is connected with wire 8, injecting member F and supply pipe 12 are inserted into sheath pipe 3 so that the forward end of injecting member F comes to nearly the centre of conduit B and is opposed to check valve 4 provided in the double-wall pipe A adjacent to the double-wall pipes A in which the space 5 between the pipes and the ground has already been filled with back-filling material, and back-filling material is injected through the check valve 4 into space 5 between outer pipe 2 of the first double-wall pipe A and the ground.

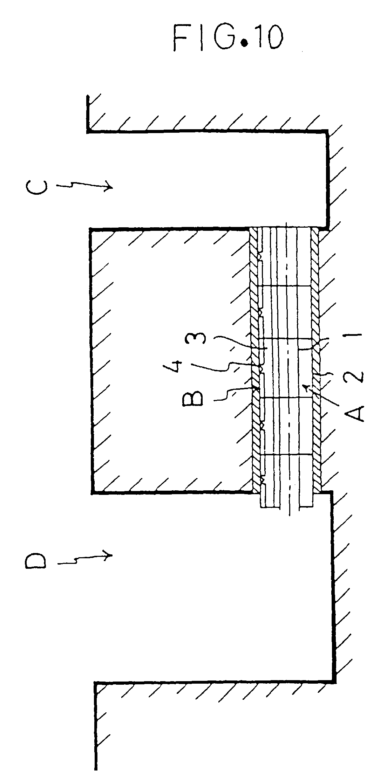

Then the forward end of the injecting member F is moved to positions at which the forward end of injecting member F is opposed to check valves 4 of second, third and other double-wall pipes A arranged on a side of arrival vertical shaft D one by one, and at the respective positions, back-filling material can be injected into space 5 between outer pipes 2 of double-wall pipes A and the ground over the full length of conduit B as shown in Fig 10.

## Claims

1. A method of injecting back-filling material into a space between the outside of double-wall pipes and the ground in laying a conduit comprised of double-wall pipes in the ground by the pipe-jacking method, each of said double-wall pipes (A) comprising an inner pipe (1) and an outer pipe (2) and being provided with a sheath pipe (3) into which a back-filling material supply pipe (11) is inserted, between the inner pipe and the outer pipe and with a check valve (4) through which back-filling material is injected into a space between the outside of the double-wall pipes and the ground in the outer pipe, the conduit extending between a first (C) and a second (D) vertical shaft, the method comprising the steps of:
inserting a back-filling material supply pipe (11) provided with a back-filling material injecting member (F) at the forward end thereof, into the sheath pipe (3), from the side of the first vertical shaft (C) so that an outlet of the back-filling material supply pipe comes to a position at which the outlet of the back-filling material supply pipe is opposed to a central check valve (4) which is disposed at about a centre of the conduit;
injecting back-filling material through the central check valve (4) into a space between the outside of the double-wall pipes and the ground;
thereafter moving toward the first vertical shaft (C) the back-filling material supply pipe (11) so that the back-filling material supply pipe comes to the next position at which the outlet of the back-filling material supply pipe is opposed to the check valve (4) next to the central check valve;
injecting back-filling material through the next check valve (4) into a space between the outside of the double-wall pipes and the ground;
thereafter further moving toward the first vertical shaft (C) the back-filling material supply pipe (11) so that the back-filling material supply pipe comes to positions at which the outlet of the back-filling material supply pipe is opposed to each check valve (4) and injecting back-filling material through the check valve opposed to the outlet of the back-filling material supply pipe into a space between the outside of the double-wall pipes and the ground in the respective positions by which a space between the outside of the double-wall pipes and the ground is filled with back-filling material over about a half length of the conduit;
thereafter inserting the back-filling material supply pipe (11) from the side of the second vertical shaft (D) into the sheath pipe (3) so that an outlet of the back-filling material supply pipe (11) comes to a position at which the outlet of the back-filling material supply pipe is opposed to an inmost check valve (4) which is disposed at an inmost position in a part of the conduit wherein a space between the outside of said part of the conduit and the ground is not yet filled with back-filling material;
injecting back-filling material through the inmost check valve (4) into a space between the outside of the double-wall pipes and the ground;
thereafter moving toward the second vertical shaft (D) the back-filling material supply pipe (11) in the sheath pipe so that the back-filling material supply pipe comes to the next position at which the outlet of the back-filling material supply pipe is opposed to the check valve (4) next to the inmost check valve;
injecting back-filling material through the next check valve (4) into a space between the outside of the double-wall pipes and the ground;
thereafter further moving toward the second vertical shaft (D) the back-filling material supply pipe (11) so that the back-filling material supply pipe comes to positions at which the outlet of the back-filling material supply pipe is opposed to each check valve (4) and injecting back-filling material through the check valve opposed to the outlet of the back-filling material supply pipe into a space between the outside of the double-wall pipes and the ground in the respective positions by which a space between the outside of the double-wall pipes and the ground is filled with back-filling material over the full length of the conduit.

2. A method as claimed in Claim 1 wherein the back-filling material supply pipe (11) includes two packing means (16, 17) disposed at a given interval and an injecting member with an outlet disposed between the packing means, and the method further comprises the step of inflating the packing means when the injecting member comes to a position at which the injecting member is opposed to a check valve (4) so that the inside of the sheath pipe is partitioned by the inflated packing means and fixing the injecting member.

3. A method as claimed in Claim 1, wherein back-filling material is intermittently injected into the sheath pipe (3), while the back-filling material supply pipe (11) is moved in the sheath pipe.

4. A method as claimed in Claim 1, wherein a cleaning member (21) which is brought into contact with the inside of the sheath pipe (3) is connected with the injecting member (F) so that the inside of the sheath pipe is cleaned by the cleaning member while the back-filling material supply pipe (11) is moved in the sheath pipe.

## Patentansprüche

1. Ein Verfahren zum Einspritzen von Hinterfüllungsmaterial in einen Raum zwischen der Außenseite von doppelwandigen Rohren und dem Boden beim Verlegen einer Rohrleitung aus doppelwandigen Rohren im Boden mittels des Rohrvorpreßverfahrens, wobei jedes der doppelwandigen Rohre (A) aus einem Innenrohr (1) und einem Außenrohr (2) besteht und mit einem Hüllrohr (3), in das ein Hinterfüllungsmaterialzufuhrrohr (11) eingeführt ist und das sich zwischen dem Innenrohr und dem Außenrohr befindet, und mit einem Rückschlagventil (4) ausgestattet ist, durch welches Hinterfüllungsmaterial in einen Raumraum im Außenrohr zwischen der Außenseite der doppelwandigen Rohre und dem Boden eingespritzt wird, wobei sich die Rohrleitung zwischen einem ersten (C) und einem zweiten (D) senkrechten Schacht erstreckt, und wobei das Verfahren folgende Schritte umfaßt:
Einführen eines Hinterfüllungsmaterialzufuhrrohrs (11), das an seinem Vorderende mit einem Hinterfüllungsmaterialeinspritzteil (F) ausgestattet ist, in das Hüllrohr (3) von der Seite des ersten senkrechten Schachts (C) her, so daß eine Auslaßöffnung des Hinterfüllungsmaterialzufuhrrohrs an eine Position gelangt, in der die Auslaßöffnung des Hinterfüllungsmaterialzufuhrrohrs gegenüber einem mittleren Rückschlagventil (4) liegt, das sich etwa in der Mitte der Rohrleitung befindet;
Einspritzen von Hinterfüllungsmaterial durch das mittlere Rückschlagventil (4) in einen Raum zwischen der Außenseite der doppelwandigen Rohre und dem Boden;
danach Verschieben des Hinterfüllungsmaterialzufuhrrohrs (11) in Richtung des ersten senkrechten Schachts (C), so daß das Hinterfüllungsmaterialzufuhrrohr an die nächste Position gelangt, an der die Auslaßöffnung des Hinterfüllungsmaterialzufuhrrohrs gegenüber dem Rückschlagventil (4) neben dem mittleren Rückschlagventil liegt;
Einspritzen von Hinterfüllungsmaterial durch das nächste Rückschlagventil (4) in einen Raum zwischen der Außenseite der doppelwandigen Rohre und dem Boden;
danach weiteres Verschieben des Hinterfüllungsmaterialzufuhrrohrs (11) in Richtung des ersten senkrechten Schachts (C), so daß das Hinterfüllungsmaterialzufuhrrohr an Positionen gelangt, an denen die Auslaßöffnung des Hinterfüllungsmaterialzufuhrrohrs gegenüber dem jeweiligen Rückschlagventil (4) liegt, und Einspritzen von Hinterfüllungsmaterial durch das Rückschlagventil, das der Auslaßöffnung des Hinterfüllungsmaterialzufuhrrohrs gegenüberliegt, in einen Raum zwischen der Außenseite der doppelwandigen Rohre und dem Boden an den jeweiligen Positionen, wodurch ein Raum zwischen der Außenseite der doppelwandigen Rohre und dem Boden über etwa die halbe Länge der Rohrleitung mit Hinterfüllungsmaterial gefüllt wird;
danach Einführen des Hinterfüllungsmaterialzufuhrrohrs (11) von der Seite des zweiten senkrechten Schachts (D) her in das Hüllrohr (3), so daß eine Auslaßöffnung des Hinterfüllungsmaterialzufuhrrohrs (11) an eine Position gelangt, an welcher die Auslaßöffnung des Hinterfüllungsmaterialzufuhrrohrs gegenüber einem innersten Rückschlagventil (4) liegt, das sich an einer innersten Position in einem Teil der Rohrleitung befindet, wobei ein Raum zwischen der Außenseite dieses Teils der Rohrleitung und dem Boden noch nicht mit dem Hinterfüllungsmaterial gefüllt ist;
Einspritzen von Hinterfüllungsmaterial durch das innerste Rückschlagventil (4) in einen Raum zwischen der Außenseite der doppelwandigen Rohre und dem Boden;
danach Verschieben des Hinterfüllungsmaterialzufuhrrohrs (11) im Hüllrohr in Richtung des zweiten senkrechten Schachts (D), so daß das Hinterfüllungsmaterialzufuhrrohr an die nächste Position gelangt, an welcher die Auslaßöffnung des Hinterfüllungsmaterialzufuhrrohrs gegenüber dem Rückschlagventil (4) neben dem innersten Rückschlagventil liegt;
Einspritzen von Hinterfüllungsmaterial durch das nächste Rückschlagventil (4) in einen Raum zwischen der Außenseite der doppelwandigen Rohre und dem Boden;
danach weiteres Verschieben des Hinterfüllungsmaterialzufuhrrohrs (11) in Richtung des zweiten senkrechten Schachts (D), so daß das Hinterfüllungsmaterialzufuhrrohr an Positionen gelangt, an denen die Auslaßöffnung des Hinterfüllungsmaterialzufuhrrohrs gegenüber dem jeweiligen Rückschlagventil (4) liegt, und Einspritzen von Hinterfüllungsmaterial durch das Rückschlagventil gegenüber der Auslaßöffnung des Hinterfüllungsmaterialzufuhrrohrs in einen Raum zwischen der Außenseite der doppelwandigen Rohre und dem Boden an den jeweiligen Positionen, wodurch ein Raum zwischen der Außenseite der doppelwandigen Rohre und dem Boden über die gesamte Länge der Rohrleitung mit Hinterfüllungsmaterial gefüllt wird.

2. Verfahren gemäß Anspruch 1, wobei das Hinterfüllungsmaterialzufuhrrohr (11) zwei Manschettendichtungen (16, 17) beinhaltet, die sich in einem bestimmten Abstand befinden, sowie einen Einspritzteil mit einer Auslaßöffnung, der sich zwischen den Manschettendichtungen befindet, und wobei das Verfahren weiters den Schritt umfaßt, die Manschettendichtungen aufzublasen, wenn der Einspritzteil an eine Position gelangt, an welcher der Einspritzteil gegenüber dem Rückschlagventil (4) liegt, so daß das Innere des Hüllrohrs durch die aufgeblasenen Manschettendichtungen unterteilt wird und der Einspritzteil fixiert wird.

3. Verfahren gemäß Anspruch 1, wobei Hinterfüllungsmaterial abschnittweise in das Hüllrohr (3) eingespritzt wird, während das Hinterfüllungsmaterialzufuhrrohr (11) in das Hüllrohr geschoben wird.

4. Verfahren gemäß Anspruch 1, wobei ein Reinigungsteil (21), welcher mit dem Inneren des Hüllrohrs (3) in Berührung gebracht wird, mit dem Einspritzteil (F) verbunden wird, so daß das Innere des Hüllrohrs durch den Reinigungsteil gereinigt wird, während das Hinterfüllungsmaterialzufuhrrohr (11) im Hüllrohr verschoben wird.

## Revendications

1. Un procédé d'injection de matériau de remplissage dans un espace entre l'extérieur de tuyaux à double paroi et le sol dans la pose d'un conduit composé de tuyaux à double paroi dans le sol selon le procédé de vérinage de tuyaux, chacun desdits tuyaux à double paroi (A) se composant d'un tuyau interne (1) et d'un tuyau externe (2) et étant muni d'un tuyau de gaine (3) dans lequel est inséré un tuyau d'alimentation en matériau de remplissage (11), entre le tuyau interne et le tuyau externe et d'une soupape d'arrêt (4) au travers de laquelle est injecté le matériau de remplissage dans un espace entre l'extérieur des tuyaux à double paroi et le sol dans le tuyau externe, le conduit s'étendant entre un premier (C) et un second (D) arbre vertical, le procédé se composant des étapes consistant :
à insérer, dans le tuyau de gaine (3), un tuyau d'alimentation en matériau de remplissage (11) muni d'un élément d'injection de matériau de remplissage (F) à l'extrémité d'avant de celui-ci depuis le côté du premier arbre vertical (C) de façon à ce qu'un orifice d'évacuation du tuyau d'alimentation en matériau de remplissage arrive à une position à laquelle l'orifice d'évacuation du tuyau d'alimentation en matériau de remplissage est à l'opposé d'une soupape d'arrêt centrale (4), laquelle est disposée à peu près à un centre du conduit ;
à injecter le matériau de remplissage au travers de la soupape d'arrêt centrale (4) dans un espace entre l'extérieur des tuyaux à double paroi et le sol ;
à déplacer par la suite le tuyau d'alimentation en matériau de remplissage (11) vers le premier arbre vertical (C) de façon à ce que le tuyau d'alimentation en matériau de remplissage arrive à la position suivante à laquelle l'orifice d'évacuation du tuyau d'alimentation en matériau de remplissage est à l'opposé de la soupape d'arrêt (4) à côté de la soupape d'arrêt centrale ;
à injecter le matériau de remplissage au travers de la soupape d'arrêt suivante (4) dans un espace entre l'extérieur des tuyaux à double paroi et le sol ;
à déplacer plus encore par la suite le tuyau d'alimentation en matériau de remplissage (11) vers le premier arbre vertical (C) de façon à ce que le tuyau d'alimentation en matériau de remplissage arrive à des positions auxquelles l'orifice d'évacuation du tuyau d'alimentation en matériau de remplissage est à l'opposé de chacune des soupapes d'arrêt (4) et à injecter le matériau de remplissage au travers de la soupape d'arrêt à l'opposé de l'orifice d'évacuation du tuyau d'alimentation en matériau de remplissage dans un espace entre l'extérieur des tuyaux à double paroi et le sol dans les positions respectives grâce auxquelles on remplit de matériau de remplissage un espace entre l'extérieur des tuyaux à double paroi et le sol sur environ une demi-longueur du conduit ;
à insérer par la suite dans le tuyau de gaine (3) le tuyau d'alimentation en matériau de remplissage (11) depuis le côté du second arbre vertical (D) de façon à ce qu'un orifice d'évacuation du tuyau d'alimentation en matériau de remplissage (11) arrive à une position à laquelle l'orifice d'évacuation du tuyau d'alimentation en matériau de remplissage est à l'opposé d'une soupape d'arrêt la plus interne (4), laquelle est disposée en une position la plus interne dans une partie du conduit dans lequel un espace entre l'extérieur de ladite partie du conduit et le sol n'est pas encore rempli de matériau de remplissage ;
à injecter le matériau de remplissage au travers de la soupape d'arrêt la plus interne (4) dans un espace entre l'extérieur des tuyaux à double paroi et le sol ;
à déplacer par la suite le tuyau d'alimentation en matériau de remplissage (11) dans le tuyau de gaine vers le second arbre vertical (D) de façon à ce que le tuyau d'alimentation en matériau de remplissage arrive à la position suivante à laquelle l'orifice d'évacuation du tuyau d'alimentation en matériau de remplissage est à l'opposé de la soupape d'arrêt (4) à côté de la soupape d'arrêt la plus interne ;
à injecter le matériau de remplissage au travers de la soupape d'arrêt suivante (4) dans un espace entre l'extérieur des tuyaux à double paroi et le sol ;
à déplacer plus encore par la suite le tuyau d'alimentation en matériau de remplissage (11) vers le second arbre vertical (D) de façon à ce que le tuyau d'alimentation en matériau de remplissage arrive à des positions auxquelles l'orifice d'évacuation du tuyau d'alimentation en matériau de remplissage est à l'opposé de chacune des soupapes d'arrêt (4) et à injecter le matériau de remplissage au travers de la soupape d'arrêt à l'opposé de l'orifice d'évacuation du tuyau d'alimentation en matériau de remplissage dans un espace entre l'extérieur des tuyaux à double paroi et le sol dans les positions respectives grâce auxquelles un espace entre l'extérieur des tuyaux à double paroi et le sol est rempli de matériau de remplissage sur toute la longueur du conduit.

2. Un procédé selon la revendication 1 dans lequel le tuyau d'alimentation en matériau de remplissage (11) comporte deux moyens d'étanchéité (16, 17) disposés à un intervalle donné et un élément d'injection muni d'un orifice d'évacuation disposé entre les moyens d'étanchéité, et le procédé se compose en outre de l'étape consistant à gonfler les moyens d'étanchéité lorsque l'élément d'injection arrive à une position à laquelle l'élément d'injection est à l'opposé d'une soupape d'arrêt (4) de façon à ce que l'intérieur du tuyau de gaine soit cloisonné par les moyens d'étanchéité gonflés et fixe l'élément d'injection.

3. Un procédé selon la revendication 1, dans lequel le matériau de remplissage est injecté par intermittence dans le tuyau de gaine (3), tandis que l'on déplace le tuyau d'alimentation en matériau de remplissage (11) dans le tuyau de gaine.

4. Un procédé selon la revendication 1, dans lequel un élément de nettoyage (21), lequel est amené en contact avec l'intérieur du tuyau de gaine (3), est raccordé à l'élément d'injection (F) de façon à ce que l'intérieur du tuyau de gaine soit nettoyé par l'élément de nettoyage tandis que l'on déplace le tuyau d'alimentation en matériau de remplissage (11) dans le tuyau de gaine.
